# EUROPÄISCHE PATENTANMELDUNG

(11) **EP 3 770 571 A1**
(43) Veröffentlichungstag der Anmeldung: **27.01.2021**
(21) Anmeldenummer: 19188146.5
(22) Anmeldetag: 24.07.2019
(51) Int. Cl.: G01L 5/00, B23Q 17/09

(54) **VERFAHREN ZUR ERMITTLUNG VON STEIFIGKEITSINFORMATIONEN BEI BOHRPROZESSEN**

(71) Anmelder: Johannes Lübbering GmbH, 33442 Herzebrock-Clarholz (DE)
(72) Erfinder: Bergmann, Bruno, 33334 Gütersloh (DE); Flaskamp, Andreas, 33397 Rietberg (DE); Lübbering, Achim, 33442 Herzebrock-Clarholz (DE)
(74) Vertreter: Patentanwälte Behrmann Wagner PartG mbB

(57) **Zusammenfassung**

Die Erfindung betrifft ein Verfahren zur Ermittlung von Steifigkeitsinformationen eines zu bearbeitenden Bauteils (10) bei Bohrprozessen, aufweisend die Schritte: Anordnung einer Haltevorrichtung (1) mit einer Aufnahmeeinheit (2,3) für eine Messeinrichtung (20) an und/oder vorzugsweise unmittelbar vor dem zu bearbeitenden Bauteil (10), Anbringung einer Messeinrichtung (20) an der Haltevorrichtung (1) mittels der Aufnahmeeinheit (2,3) Beaufschlagung einer Oberfläche des zu bearbeitende Bauteils mit einer Axial- und/oder Rotationskraft vorzugsweise durch die Messeinrichtung (20), Erfassung von während der Kraftbeaufschlagung ermittelten Messwerte durch die Messeinrichtung (20), und Bereitstellung von Steifigkeitsinformationen des Bauteils (10) basierend auf den erfassten Prozessparametern.

## Beschreibung

Die vorliegende Erfindung betrifft ein Verfahren zur Ermittlung von Steifigkeitsinformationen bei Bohrprozessen an einem Bauteil sowie eine zugehörige Vorrichtung zur Steifigkeitsmessung.

Vorrichtungen zur Anfertigung von definierten Bohrungen in Bauteilen und insbesondere in der Flugzeugstrukturbauteilfertigung unter Einsatz von Bohrmaschinen sind im Stand der Technik bekannt. Je nach Anwendungsfall und zu bearbeitendem Bauteil werden Bohrmaschinen mit konstantem Bohrvorschub oder Vibrationsbohrmaschinen eingesetzt. In der Regel werden die Maschinen in unmittelbar vor dem zu bearbeitenden Werkstück bzw. Bauteil mittels einer Haltevorrichtung positioniert, um dann einen vorzugsweise automatischen Bohrzyklus durchzuführen.

Bei Vibrationsbohrmaschinen wird in der Regel ein konstanter Bohrvorschub des Leitspindelgetriebes mit einer vordefinierten wellenförmigen Vibration überlagert. Dies hat den Zweck, einen Spanbruch während des Bohrprozesses zu erzeugen. Die dabei entstehenden kleineren Späne lassen sich besser absaugen, schleifen weniger an der Bohrungswand und reduzieren die Temperaturentwicklung im Bauteil. Eine maschinenseitige Beeinflussung des Bohrprozesses bzw. der Bohrprozessparameter kann hierbei durch bereits bekannte Einstellmittel der Bohrmaschine erfolgen. Beispielsweise kann neben einem spezifischen Wert für den Bohrvorschub des Leitspindelgetriebes auch die einem Bohrvorschub überlagerte wellenförmige Vibration insbesondere hinsichtlich der anliegenden Frequenz und/oder Amplitude angepasst werden.

Auch beeinflusst die Steifigkeit des zu bearbeitenden bzw. zu bohrenden Bauteils das Verhalten der Vibrationsbohrmaschine und kann somit einen signifikanten Einfluss auf die Bohrqualität (Durchmesser, Oberfläche) und auf die Standzeit des Bohrwerkzeuges haben. Eine Anpassung bzw. Abstimmung der Bohrprozessparameter auf eine Steifigkeit der zu bearbeitenden Bauteile erfolgt gemäß dem Stand der Technik entweder gar nicht oder wird lediglich händisch oder wenigstens teilweise basierend auf Erfahrungswerten vorgenommen. Hierdurch sind jedoch reproduzierbare und hinsichtlich der resultierenden Bohrqualität optimierte Ergebnisse für den Bohrprozess nicht möglich.

Insbesondere kann eine falsche bzw. nicht optimierte Bohrprozessparameterwahl zu hohen Qualitätseinbußen und Folgekosten führen. Beispielsweise kann sich das zu bearbeitende Bauteil zur Bohrmaschine hin bewegen und somit die Vibrationseinleitung auf das Leitspindelgetriebe negativ beeinträchtigen oder sogar außer Funktion setzen. Hierbei können längere Späne erzeugt werden, welche sich negativ auf die Oberflächengüte und/oder auf die genaue Passung auswirken können. Auch kann erhöhte Reibung auftreten, was zu einem erhöhten Verschleiß am Bohrwerkzeug führen kann. Zudem können durch potentielle Oberflächenbeschädigungen erhöhte Nachbearbeitungskosten entstehen. Im schlimmsten Fall kann ein Spänestau und eine mögliche Beschädigung des Bohrers auftreten.

Aufgabe der vorliegenden Erfindung ist es daher basierend auf dem bekannten Stand der Technik ein Verfahren und eine Vorrichtung bereitzustellen, mit welchem Informationen über die Steifigkeit eines zu bearbeitenden bzw. bohrenden Bauteils einfach und zuverlässig ermittelt werden können. Die somit erlangten Informationen können dann für eine verbesserte und reproduzierbare Anpassung der Bohrprozessparameter auf den jeweiligen Bohrprozess genutzt werden. Diese zugrundeliegende Aufgabe wird durch das Verfahren mit den Merkmalen der unabhängigen Ansprüche gelöst. Vorteilhafte Weiterbildungen der Erfindung sind in den Unteransprüchen beschrieben.

In einem ersten Aspekt betrifft die Erfindung ein Verfahren zur Ermittlung von Steifigkeitsinformationen eines zu bearbeitenden Bauteils bei Bohrprozessen, aufweisend die Schritte:
- Anordnung einer Haltevorrichtung mit einer Aufnahmeeinheit für eine Messeinrichtung an und/oder vorzugsweise unmittelbar vor dem zu bearbeitenden Bauteil oder einer Oberfläche davon,
- Anbringung einer Messeinrichtung an der Haltevorrichtung mittels der Aufnahmeeinheit,
- Beaufschlagung einer Oberfläche des zu bearbeitende Bauteils mit einer Axial- und/oder Rotationskraft vorzugsweise durch die Messeinrichtung,
- Erfassung von während der Kraftbeaufschlagung ermittelten Messwerten durch die Messeinrichtung, und
- Bereitstellung von Steifigkeitsinformationen des Bauteils basierend auf den erfassten Messwerten.

Die Haltevorrichtung ist vorzugsweise eine Haltevorrichtung geeignet für die Positionierung und/oder Durchführung eines Bohrprozesses am zum bearbeitenden Bauteil, insbesondere zum Durchführen einer Bohrung an bzw. in einer vordefinierten Stelle des zu bearbeitenden Bauteils. Hierdurch kann die jeweilige Steifigkeit eines Bauteils bzw. einer Struktur idealerweise genau an der Stelle untersucht werden, an der die Bohrung durchzuführen ist. Ebenso kann hierdurch die Messeinrichtung auf gleiche Art und Weise an dem zu bearbeitenden Bauteil befestigt, wie später eine daran zu befestigende Bohrmaschine, wodurch ein gleichartiges Systemverhalten und somit eine größtmögliche Genauigkeit der Messung erzielt wird.

Die Haltevorrichtung kann hierbei in an sich bekannter Weise am und/oder vor dem zu bearbeitenden Bauteil bzw. an und/oder unmittelbar vor einer zu bearbeitenden Oberfläche des Bauteils angeordnet werden. Dies kann mit am Bauteil zu befestigenden Verbindungselementen, beispielsweise Klemm- oder Spannelementen, der Haltevorrichtung und/oder mit zusätzlichen externen Verbindungsmitteln erfolgen. Die Haltevorrichtung kann auch unabhängig, d.h. ohne direkte Verbindung, zum vorzugsweise fixierten Bauteil und in einer vordefinierten Entfernung dazu angeordnet sein. Die Haltevorrichtung kann durch eine Bohrschablone gebildet sein oder diese umfassen. Die Bohrschablone kann wenigstens eine, bevorzugt eine Mehrzahl von Ausnehmungen aufweisen, welche vorzugsweise koaxial mit der zu bohrenden Bohrung im Bauteil angeordnet bzw. ausgebildet sind.

Die Aufnahmeeinheit für die Messeinrichtung ist vorzugsweise positionsfest an der Haltevorrichtung angeordnet, d.h. relativ unbeweglich zur Haltevorrichtung ausgebildet. Die Aufnahmeeinheit kann selektiv mit der Haltevorrichtung verbindbar ausgebildet sein. Beispielsweise kann die Haltevorrichtung und/oder die Aufnahmeeinheit Verbindungsmittel aufweisen, mittels derer die Aufnahmeeinheit an der Haltevorrichtung positionsfest angeordnet sein kann. Die Aufnahmeeinheit ist vorzugsweise durch einen Verbindungsflansch und einen sich davon wegerstreckenden Hohlzylinder gebildet. Die Aufnahmeeinheit weist zudem vorzugsweise Verbindungsmittel für die Messeinrichtung auf, mittels derer diese selektiv an der Messeinrichtung angeordnet werden kann. In einem bevorzugten Ausführungsbeispiel ist die Aufnahmeeinheit ausgebildet eine Bohrmaschine zur Durchführung eines, vorzugsweise der Steifigkeitsinformationsermittlung nachfolgenden, Bohrprozesses am Bauteil aufzunehmen.

In einem bevorzugten Ausführungsbeispiel umfasst die Messeinrichtung eine Bohrmaschine, besonders bevorzugt eine Vibrationsbohrmaschine, welche zur Durchführung eines Bohrprozesses am Bauteil geeignet ist. Zusätzlich oder alternativ kann die Messeinrichtung auch einen Kraftsensor, beispielsweise einen DMS oder Piezo-Sensor aufweisen. Dieser ist vorzugsweise ausgebildet, Prozessparameter insbesondere während der Kraftbeaufschlagung vorzugsweise durch bzw. mittels einer Bohrmaschine zu detektieren.

Besonders bevorzugt bildet die Bohrmaschine selbst die Messeinrichtung. Die Bohrmaschine ist vorzugsweise ausgebildet verschiedene Messwerte bei deren Betrieb bzw. Aktivierung und insbesondere bei der Interaktion mit dem zu bearbeitenden Bauteil zu erfassen. Die Messwerte umfassen vorzugsweise wenigstens den aufgenommenen Motorstrom, die Spindeldrehzahl, das Motordrehmoment und die insbesondere axiale Position des Werkzeugs bzw. einen Werkzeughub.

Die Messeinrichtung umfasst vorzugsweise weiterhin einen Messdorn, welcher der Bohrmaschine selektiv zugeordnet bzw. an dieser als Werkzeug vorzugsweise mittels des Bohrfutters der Maschine angeordnet werden kann. Der Messdorn ist vorzugsweise ausgebildet ein Zerspanen des Bauteils, insbesondere bei Kontakt mit dessen Oberfläche, zu vermeiden. Hierfür weist der Messdorn vorzugsweise einen distalen bzw. endseitig angeordneten flachen Kontaktabschnitt auf, welcher vorzugsweise parallel zur Bauteiloberfläche anzuordnen ist. In einer besonders bevorzugten Ausführungsform ist der Messdorn ausgebildet, nur eine Axialkraft, und demnach vorzugsweise keine Rotationskraft, in die Bauteiloberfläche einzubringen. Der Messdorn weist hierfür Entkopplungsmittel bzw. Lagermittel auf. Diese sind vorzugsweise derart ausgebildet, dass eine Rotationsübertragung von einem Ende auf ein mit dem Bauteil in Verbindung zu bringendem Ende des Messdorns vermieden wird. Der Messdorn kann auch zwei- oder mehrteilig ausgebildet sein, wobei die einzelnen Teile zueinander relativ bewegbar, insbesondere drehbar zueinander angeordnet sind.

Bei einem nicht zu großen Krafteintrag erfolgt demnach vorzugsweise kein Zerspanen und/oder wesentliches Verformen der Bauteiloberfläche. Der Messdorn weist vorzugsweise im Übrigen einen im Wesentlichen zylindrischen Körper auf. Der Messdorn ist vorzugsweise aus Metall oder Polymermaterial gebildet.

In einer weiteren bevorzugten Ausführungsform kann der Messdorn einen Kraftsensor wie oben beschrieben aufweisen. Dieser kann im Messdorn integriert sein oder als separates Bauteil und/oder vorzugsweise selektiv mit dem Messdorn verbindbar ausgebildet sein.

Beim erfindungsgemäßen Verfahren erfolgt eine Beaufschlagung des Bauteils bzw. der Bauteiloberfläche mit einer Axial- und/oder Rotationskraft vorzugsweise durch die Messeinrichtung. Unter Axialkraft wird hierbei eine Beaufschlagung des Bauteils mit einer Kraft parallel und/oder koaxial zur geplanten Bohrung im Bauteil verstanden. Die Axialkraft erstreckt sich somit parallel und/oder koaxial zur Drehachse des Bohrers bzw. zur Drehachse des Bohrfutters der Bohrmaschine bei der geplanten Durchführung der Bohrung. Bei Verwendung eines Messdorns wie oben beschrieben bezieht sich die Axialkraft auf eine Kraft koaxial zur axialen Erstreckung des Messdorns der Messeinrichtung. Unter Rotationskraft wird eine Kraft um die jeweilige axiale Erstreckung verstanden.

Die Kraftbeaufschlagung auf die Oberfläche des Bauteils erfolgt vorzugsweise mit bzw. mittels des oben genannten Messdorns der Messeinrichtung und vorzugsweise mit konstantem Vorschub und/oder konstanter Drehzahl. Die Kraftbeaufschlagung erfolgt vorzugsweise senkrecht zu einer Oberflächenerstreckung des Bauteils. Bei einer gekrümmten Oberfläche erfolgt die Kraftbeaufschlagung vorzugsweise senkrecht zu einer Tangente zur jeweiligen Bauteilkrümmung am durchzuführenden Messpunkt bzw. geplanten Bohrpunkt.

Die Erfassung der Messwerte während der Kraftbeaufschlagung umfasst vorzugsweise wenigstens eine Erfassung der Stromaufnahme eines Motors der Messeinrichtung bzw. der von der Messeinrichtung umfassten Bohrmaschine in Abhängigkeit der Zeit und/oder des beim Vorschub zurückgelegten Wegs. Die Erfassung umfasst vorzugsweise weiterhin eine Spindeldrehzahl, ein Motordrehmoment, vorzugsweise jeweils über die jeweilige Zeit und/oder des beim Vorschub zurückgelegten Wegs. Im Falle eines Kraftsensors, wie zuvor beschrieben, umfasst die Erfassung der Prozessparameter bei Kraftbeaufschlagung durch die Bohrmaschine bzw. durch Kraftbeaufschlagungsmittel wenigstens eine in Axialrichtung bzw. Bohrrichtung wirkende Kraft, vorzugsweise eine Kompressionskraft, in Abhängigkeit der Zeit und/oder des beim Vorschub zurückgelegten Wegs.

Die Bereitstellung der Steifigkeitsinformationen basiert auf den erfassten Messwerten während der Kraftbeaufschlagung. Unter Steifigkeitsinformationen werden insbesondere Informationen und/oder Werte, vorzugsweise wenigstens ein Steifigkeitswert, verstanden, welche bzw. welcher eine Aussage über die jeweilige Steifigkeit des zu bearbeitenden Bauteils, und insbesondere an der jeweiligen geplanten Bohrstelle, ermöglichen. Die Bereitstellung kann insbesondere durch die Messeinrichtung mittels eines elektrisch auswertbaren Signals erfolgen. Die Breistellung kann durch eine der Messeinrichtung zugeordneten Rechen- und/oder Ausgabeeinheit erfolgen. Die Bereitstellung kann eine visuelle Ausgabe der Steifigkeitsinformationen umfassen. Die Steifigkeitsinformationen können hierbei anhand eines numerischen Wertes und/oder mittels einer Vergleichsskala bereitgestellt bzw. ausgegeben werden.

In einer bevorzugten Ausführungsform werden die Steifigkeitsinformationen basierend auf den oben genannten erfassten Messwerten berechnet. Die Steifigkeitsinformationen basieren vorzugsweise auf einer Veränderung und insbesondere einer Steigung der erfassten Stromaufnahme über die Zeit der Kraftbeaufschlagung und/oder über einen Vorschub der Messeinrichtung. Besonders bevorzugt basieren die Steifigkeitsinformationen auf einem berechneten Steigungswinkel der erfassten Stromaufnahme oder entsprechen diesem. Die Steifigkeitsinformationen können alternativ oder zusätzlich auf einer Veränderung wenigstens einer in Axialrichtung bzw. Bohrrichtung wirkende Kraft in Abhängigkeit der Zeit und/oder des bei einem Vorschub durch Kraftbeaufschlagungsmittel zurückgelegten Wegs basieren.

Das erfindungsgemäße Verfahren und insbesondere die Kraftbeaufschlagung und Messwerterfassung des Verfahrens erfolgt vorzugsweise an der Stelle des Bauteils bzw. der Stelle der Oberfläche des Bauteils, an welcher die geplante Bohrung zu setzen ist. Die Kraftbeaufschlagung und Messwerterfassung erfolgt vorzugsweise an einer Stelle koaxial zu geplanten Bohrung. Das erfindungsgemäße Verfahren und insbesondere die Kraftbeaufschlagung und Messwerterfassung erfolgt vorzugsweise für einen Vielzahl von unterschiedlichen Stellen am Bauteil bzw. an Stellen der Oberfläche des Bauteils, an welchen jeweils eine geplante Bohrung zu setzen ist. Hierdurch können für einen Vielzahl von geplanten Bohrungen an unterschiedlichen Bauteil- bzw. Oberflächenstellen die jeweiligen Steifigkeitsinformationen erfasst werden und basierend darauf die optimalen Bohrprozessparameter eingestellt werden.

Um eine Vergleichbarkeit der jeweiligen Bauteile bzw. unterschiedlicher Stellen eines Bauteils hinsichtlich deren relativer Steifigkeit zu ermöglichen, wird die jeweilige Kraftbeaufschlagungsart und die Höhe der Kraftbeaufschlagung während des Verfahrens zur Ermittlung der Steifigkeitsinformationen vorzugsweise konstant gehalten. Dies bedeutet, dass vorzugsweise eine durch die Messeinrichtung auf die Oberfläche aufgebrachte Axial- und/oder Rotationskraft für verschiedene Bauteile vordefiniert und konstant gehalten wird.

Das erfindungsgemäße Verfahren kann den weiteren Schritt einer Klassifikation der ermittelten Steifigkeitsinformationen durch die Messeinrichtung und/oder eine dieser zugeordneten Rechen- und/oder Ausgabeeinheit aufweisen. Hierbei kann insbesondere ein Vergleich und/oder eine Klassifikation anhand bereits erhobener bzw. aufgezeichneter Vergleichsdaten vorgenommen werden. Die Klassifikation kann durch Abgleich mit Datenbankinformationen der Rechen- und/oder Ausgabeeinheit erfolgen. Des Weiteren kann das Verfahren den Schritt einer vorzugsweise automatischen Abspeicherung bzw. Dokumentation der jeweiligen Steifigkeitsinformationen umfassen. Auch können zusätzlich weitere Daten, beispielsweise Bohrprozessparameter der anschließenden Bohrung, aufgezeichnet bzw. dokumentiert werden.

In einer besonders bevorzugten Ausführungsform wird das oben beschriebene Verfahren für jede geplante Bohrung und vorzugsweise an der jeweiligen Oberflächenstelle der geplanten Bohrung, insbesondere an einer Oberflächenstelle konzentrisch zur geplanten Bohrachse, an einem Bauteil durchgeführt. Auf diese Weise kann die nachfolgende Bohrung hinsichtlich der Bohrprozessparameter der Bohrmaschine auf die jeweils zuvor erhobenen Steifigkeitsinformationen abgestimmt und insbesondere optimiert werden. Die Bohrprozessparameter können insbesondere einen spezifischen Vorschub und/oder eine dem Bohrvorschub überlagerte vorzugsweise wellenförmige Vibration insbesondere hinsichtlich der anliegenden Frequenz und/oder Amplitude umfassen.

In einem weiteren Aspekt betrifft die vorliegende Erfindung eine Vorrichtung zur Ermittlung von Steifigkeitsinformationen eines zu bearbeitenden Bauteils bei Bohrprozessen, aufweisend eine Haltevorrichtung mit einer Aufnahmeeinheit für eine Messeinrichtung zur Positionierung an und/oder vorzugsweise unmittelbar vor dem zu bearbeitenden Bauteil, eine Messeinrichtung, welche selektiv in der Aufnahmeeinheit angeordnet werden kann und welche vorzugsweise dazu ausgebildet ist, eine Oberfläche des zu bearbeitende Bauteils mit einer Axial- und/oder Rotationskraft zu beaufschlagen, wobei die Messeinrichtung ferner dazu ausgebildet ist, Messwerte während der Kraftbeaufschlagung zu erfassen und basierend darauf Steifigkeitsinformationen des Bauteils bereitzustellen.

Die Messeinrichtung ist vorzugsweise eine Bohrmaschine, insbesondere eine Vibrationsbohrmaschine mit selektiv aufsetzbarem Messdorn, wie bereits oben beschrieben. Zusätzlich oder alternativ kann die Messeinrichtung auch einen Kraftsensor aufweisen, wie zuvor beschrieben. Dieser ist vorzugsweise ausgebildet, Prozessparameter insbesondere während der Kraftbeaufschlagung vorzugsweise durch bzw. mittels einer Bohrmaschine als Kraftbeaufschlagungsmittel zu detektieren.

Die Messeinrichtung bzw. die Bohrmaschine ist vorzugsweise ausgebildet ein vordefiniertes und vorzugsweise für verschiedene geplante Bohrprozesse an unterschiedlichen Bauteilen und/oder unterschiedlichen Oberflächenstellen eines Bauteils konstant gehaltenes Messprogramm durchzuführen. Hierbei erfolgt eine Kraftbeaufschlagung der Bauteiloberfläche vorzugsweise mittels eines Messdorns der Messeinrichtung mit konstantem Vorschub und/oder konstanter Drehzahl.

Die Messeinrichtung bzw. die Bohrmaschine ist vorzugsweise ausgebildet, wenigstens eine Stromaufnahme eines Motors in Abhängigkeit der Zeit und/oder des bei einem Vorschub des Messdorns zurückgelegten Wegs zu erfassen. Besonders bevorzugt ist die Messeinrichtung ausgebildet, einen Steigungswinkel der erfassten Stromaufnahme zur Bereitstellung der Steifigkeitsinformationen heranzuziehen. Dies kann insbesondere über der Messeinrichtung bzw. der Bohrmaschine zugeordnete Sensormittel erfolgen.

Die Vorrichtung kann zudem eine integrierte und/oder externe Rechen- und/oder Ausgabeeinheit aufweist, welche ausgebildet ist, die Steifigkeitsinformationen auszugeben und/oder zu klassifizieren.

Zur Vermeidung von Wiederholungen wird auf die obige Beschreibung des erfindungsgemäßen Verfahrens verwiesen, wobei das Verfahren vorzugsweise mit der erfindungsgemäßen Vorrichtung durchgeführt wird. Die oben beschriebenen Verfahrensmerkmale sollen dabei gleichermaßen für die erfindungsgemäße Vorrichtung offenbart gelten und umgekehrt.

In einem weiteren Aspekt betrifft die vorliegende Erfindung die Anwendung des erfindungsgemäßen Verfahrens in der Strukturbauteilfertigung, insbesondere in der Flugzeugstruktubauteilfertigung.

Weitere Vorteile, Merkmale und Einzelheiten der Erfindung ergeben sich aus der nachfolgenden Beschreibung bevorzugter Ausführungsbeispiele sowie anhand der Zeichnungen, diese zeigen in:
- Fig. 1:: eine teilschematische seitliche Schnittansicht der erfindungsgemäßen Vorrichtung gemäß einem bevorzugten Ausführungsbeispiel der Erfindung;
- Fig. 2:: eine Seitenansicht der erfindungsgemäßen Vorrichtung;
- Fig. 3a:: eine Detailansicht des Messdorns der erfindungsgemäßen Vorrichtung nach Fig. 2;
- Fig. 3b:: eine Detailansicht des Messdorns der erfindungsgemäßen Vorrichtung nach Fig. 2 mit Kraftsensor;
- Fig. 4:: eine schematische Darstellung der Verfahrensschritte gemäß einem bevorzugten Ausführungsbeispiel der Erfindung; und
- Fig. 5:: ein Diagramm der erfassten Messwerte während der Kraftbeaufschlagung des Bauteils durch die erfindungsgemäße Vorrichtung bzw. während des erfindungsgemäßen Verfahrens.

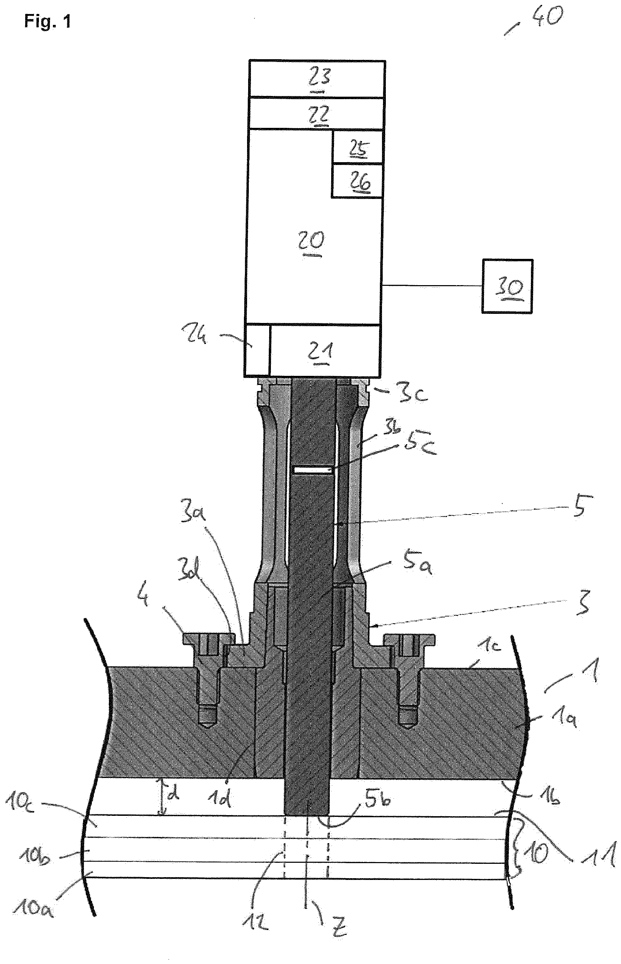

**Fig. 1** zeigt eine bevorzugte Ausführungsform der erfindungsgemäßen Vorrichtung 40 zur Ermittlung der Steifigkeit bzw. von Steifigkeitsinformationen eines zu bearbeitenden Bauteils 10. Das Bauteil 10 ist vorzugsweise ein Strukturbauteil, beispielsweise ein Flugzeugstrukturbauteil, in welches wenigstens eine geplante Bohrung 12 (siehe gestrichelte Linien in Fig. 1) oder auch mehrere Bohrungen zu setzen sind. Das Bauteil kann einlagig oder mehrlagig sein und somit mehrere Schichten 10a,10b,10c aufweisen. Die einzelnen Schichten können aus gleichartigem und/oder verschiedenem Material bestehen.

Die Vorrichtung 40 weist eine Haltevorrichtung 1 auf, welche an einem zu bearbeitenden Bauteil 10 angeordnet ist. Die Haltevorrichtung 1 kann hierbei direkt mit dem Bauteil 10 beispielsweise durch Verbindungsmittel (nicht gezeigt) verbunden sein oder ohne eine direkte Verbindung zum Bauteil 10 vor der zu bearbeitenden Oberfläche 11 des Bauteils 10 angeordnet sein.

Die Haltevorrichtung 1 umfasst einen vorzugsweise plattenförmigen Körper 1a. Eine untere Fläche 1b der Vorrichtung 1 ist vorzugsweise in einem definierten Abstand d von circa 1 bis 10 cm, mehr bevorzugt 1 bis 3 cm vor der zu bearbeitenden Oberfläche 11 des Bauteils 10 angeordnet. Die Vorrichtung 1 umfasst wenigstens eine ihr zugeordnete Aufnahmeeinheit 2,3 für eine Messeinrichtung 20. Die Aufnahmeeinheit 2,3 ist vorzugsweise selektiv mit der Haltevorrichtung 1 verbindbar, beispielsweise mittels einer Schraubverbindung 4. Die Aufnahmeeinheit weist einen hohlzylindrischen Grundkörper 3b auf, von dem sich ein flanschartiger Abschnitt 3a erstreckt. Dieser kann umfangsseitig angeordnete Löcher 3d zur Herstellung der Schraubverbindung 4 mit dem plattenförmigen Körper 1a aufweisen. Die Aufnahmeeinheit kann zudem Lagermittel 2 für ein Werkzeug 5 aufweisen, welche vorzugsweise derart ausgebildet bzw. angeordnet sind, dass ein Werkzeug 5 koaxial mit der geplanten Bohrung 12 angeordnet ist. Die Lagermittel 2 können wenigstens teilweise in einer Aussparung 1d der Haltevorrichtung 1 angeordnet sein. Diese ist vorzugsweise ebenfalls koaxial mit der geplanten Bohrung 12 angeordnet. Die Lagermittel 2 können separat oder integral mit der Aufnahmeeinheit ausgebildet sein.

Die Vorrichtung 1 stellt hierbei vorzugsweise eine Schablone für die geplante Bohrung 12 dar. Die Vorrichtung 1 kann ebenso weitere Bohrungen oder Aussparungen aufweisen, welche vorzugsweise koaxial zu den jeweiligen geplanten Bohrungen im Bauteil 10 angeordnet sind.

Endseitig weist die Aufnahmeeinheit 3 der Haltevorrichtung 1 Verbindungsmittel 3c auf, an welchen eine Messeinrichtung 20 vorzugsweise lösbar befestigt werden kann. Diese können wenigstens teilweise durch eine nutförmige Ausnehmung an einem distalen Ende des hohlzylindrischen Grundkörpers 3b gebildet sein, in welche beispielsweise der Messeinrichtung 20 zugeordnete Verbindungsmittel eingreifen können. Die Aufnahmeeinheit 3 ist vorzugsweise ausgebildet, eine zum Bohren der geplanten Bohrung 12 geeignete Bohrmaschine aufzunehmen.

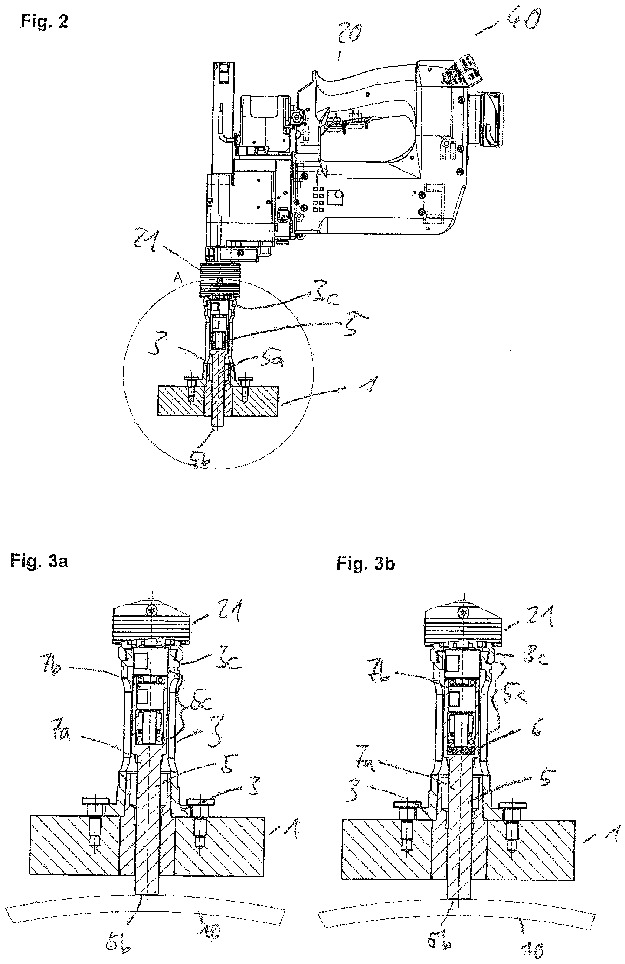

Die Messeinrichtung 20 ist vorzugsweise dazu ausgebildet, die Oberfläche 11 des Bauteils 10 als Kraftbeaufschlagungsmittel mit einer Axial- und/oder Rotationskraft zu beaufschlagen. Die Messeinrichtung 20 ist zudem ausgebildet während der Kraftbeaufschlagung Messwerte zu erfassen und basierend darauf Steifigkeitsinformationen des Bauteils bereitzustellen. Hierfür weist die Messeinrichtung Sensormittel bzw. eine spezifische Sensorik 26 auf. Alternativ oder zusätzlich kann die Messeinrichtung einen vorzugsweise zu den Kraftbeaufschlagungsmitteln separaten Kraftsensor 6 umfassen (vgl. Fig. 3b).

In einer bevorzugten Ausbildungsform ist die Messeinrichtung 20 vorzugsweise durch eine Bohrmaschine gebildet, mehr bevorzugt eine Vibrationsbohrmaschine, welche zur Durchführung der geplanten Bohrung 12 im Bauteil 10 geeignet ist. Die Bohrmaschine 20 weist einen Motor 23 mit einem diesem zugeordnetes Getriebe 22 mit justierbarem Vorschub und ein damit verbundenes Bohrfutter 21 auf. Die Bohrmaschine weist des Weiteren eine vibrationserzeugende Einheit 24 auf, welche eine wellenförmige Vibration der Rotationsbewegung und Vorschubbewegung der Bohrmaschine überlagern kann und auf ein im Bohrfutter 21 eingespanntes Werkzeug übertragen kann. Die Bohrmaschine 20 weist vorzugsweise zugeordnete Einstellmittel 25 für die Bohrprozessparameter auf, insbesondere für die Einstellung bzw. Adaption eines spezifischen Vorschubs des Werkzeugs und/oder für die Frequenz und/oder Amplitude einer wellenförmigen Vibration, welche auf ein Werkzeug überlagernd zum Vorschub eingebracht werden kann.

Die Bohrmaschine 20 weist einen dieser zugeordneten Messdorn 5 auf, welcher als Werkzeug im Bohrfutter eingespannt ist. Der Messdorn ist vorzugsweise im Wesentlichen ein länglicher zylindrischer Körper 5a mit konstantem Durchmesser und einem im Wesentlichen planen Kontaktabschnitt 5b, welcher zum Kontakt mit der Oberfläche 11 des Bauteils 10 ausgebildet ist. Der Messdorn 5 ist vorzugsweise koaxial zu einer Achse Z der geplanten Bohrung 12 ausgerichtet. In einer besonders bevorzugten Ausführungsform ist der Messdorn 5 ausgebildet, nur eine Axialkraft in die Bauteiloberfläche einzubringen. Hierfür weist der Messdorn 5 vorzugsweise Entkopplungsmittel bzw. Lagermittel 5c auf. Diese sind vorzugsweise derart ausgebildet, dass eine Rotationsübertragung von einem Ende, an welchem der Messdorn 5 mit dem Bohrfutter 21 der Maschine in Verbindung steht auf den anderenends angeordneten planen Kontaktabschnitt 5b vermieden wird.

Die Vorrichtung 40 weist vorzugsweise zudem eine Rechen- und/oder Ausgabeeinheit 30 auf. Diese ist der Messeinrichtung bzw. der Bohrmaschine 20 zugeordnet und kann in diese integriert oder als separates und damit verbindbares Bauteil ausgebildet sein. Die Rechen- und Ausgabeeinheit 30 kann beispielsweise durch einen extern mit der Messeinrichtung 20 verbindbaren Monitor, einen PC, ein Tablet, ein Smartphone oder ähnliches gebildet sein.

**Fig. 2** zeigt eine Seitenansicht einer bevorzugten Ausführungsform der erfindungsgemäßen Vorrichtung 40. Diese entspricht im Wesentlichen der Ausführungsform gemäß Fig. 1, wobei die Messeinrichtung 20 schematisch als Bohrmaschine in Seitenansicht dargestellt ist. Wie in Fig. 2 dargestellt, ist die Bohrmaschine mittels der Verbindungsmittel 3c der Aufnahmeeinheit 3 mit dieser verbunden. Der Messdorn 5 ist in das Bohrfutter 21 eingespannt.

**Fig. 3a** zeigt eine Detailansicht des in der Aufnahmeeinheit 3 geführten Messdorns 5 der erfindungsgemäßen Vorrichtung nach Fig. 2. Der Messdorn 5 weist vorzugsweise Entkopplungsmittel bzw. Lagermittel 5c auf.

Diese sind vorzugsweise derart ausgebildet, dass eine durch das Bohrfutter 21 endseitig auf den Messdorn 5 übertragene Rotationskraft nicht auf den Kontaktabschnitt 5b des Messdorns übertragen wird. Die Entkopplungsmittel 5c können insbesondere im Grundkörper 5a angeordnete Lagermittel aufweisen. Hierbei kann der Messdorn 5 wenigstens aus zwei relativ zueinander frei drehbar ausgebildeten vorzugsweise zylindrischen Elementen 7a,7b gebildet sein.

**Fig. 3b** zeigt eine Detailansicht des in der Aufnahmeeinheit 3 geführten Messdorns 5 einer alternativen erfindungsgemäßen Vorrichtung nach Fig. 2. Hierbei weist die Messeinrichtung 20 einen Kraftsensor 6 auf. Dieser ist zwischen der Bohrmaschine als Kraftbeaufschlagungsmittel und dem zu prüfenden Bauteil 10 angeordnet. Der Kraftsensor 6 ist vorzugsweise wie in Fig. 3b dargestellt im Messdorn 5 integriert oder mit diesem selektiv verbindbar ausgebildet. Der Kraftsensor 6 ist vorzugsweise derart ausgebildet, eine in Axialrichtung des Messdorns 5 wirkende Kraft in Abhängigkeit der Zeit und/oder des beim Vorschub durch die Kraftbeaufschlagungsmittel zurückgelegten Wegs zu erfassen. Der Kraftsensor 6 kann als alleiniger Sensor der Messeinrichtung 20 agieren oder zusätzlich zur zuvor beschriebenen Sensorik 26 der Messeinrichtung 20 bereitgestellt sein.

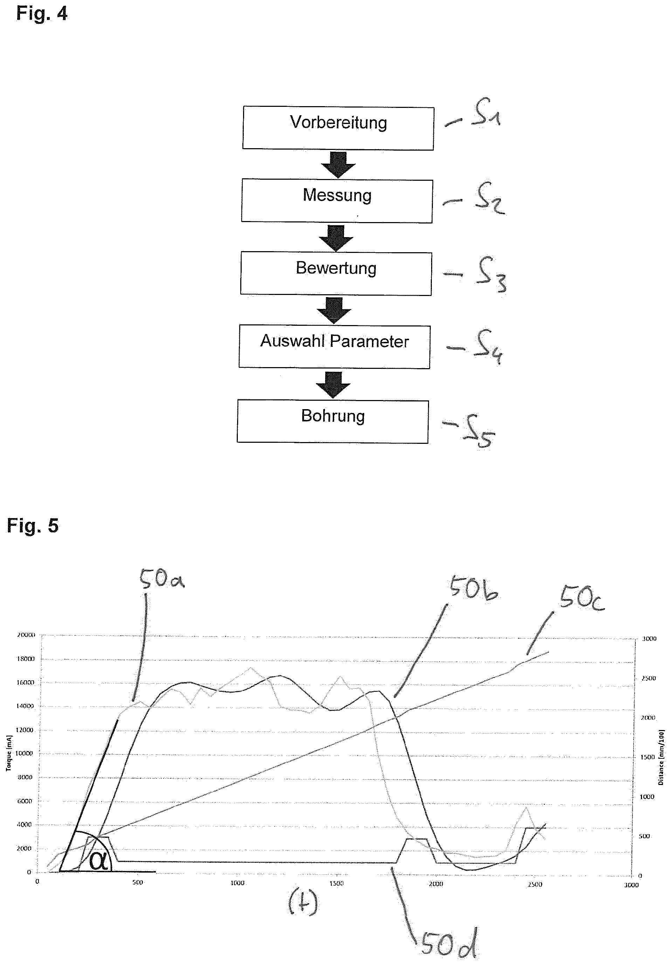

**Fig. 4** zeigt eine bevorzugte Ausführungsform des erfindungsgemäßen Verfahrens. In einem ersten Schritt S1 erfolgt eine Vorbereitung bzw. eine Anordnung der Haltevorrichtung 1 mit der zugeordneten Aufnahmeeinheit 2,3 an dem Bauteil 10. Die Aufnahmeeinheit 2,3 wird hierbei vorzugsweise koaxial mit der später mittels der Haltevorrichtung 1 zu fertigenden Bohrung 12 angeordnet. Danach oder zeitgleich erfolgt die Anbringung der Messeinrichtung bzw. der Bohrmaschine 20 mit eingespanntem Messdorn 5 an der Haltevorrichtung 1. Durch die oben beschriebene Ausrichtung der Aufnahmeeinheit 2,3 ist der Messdorn 5 vorzugsweise koaxial mit der später zu fertigenden Bohrung 12 angeordnet.

In einem zweiten Schritt S2 erfolgt die Messung bzw. Erfassung der Messwerte. Hierbei wird die Bohrmaschine 20 mit einem definierten Messprogramm betrieben, welches vorzugsweise einen konstanten Bohrvorschub und/oder einen definierte Drehzahl des Messdorns 5 umfasst. Dadurch erfolgt eine Kraftbeaufschlagung der Oberfläche 11 des Bauteils 10 mit definierten Parametern hinsichtlich der eingetragenen Axial- und/oder Rotationskraft an vorzugsweise genau der Stelle, an welcher später die Bohrung 12 zu fertigen ist. Während der Kraftbeaufschlagung werden durch die Sensorik 26 der Bohrmaschine 20 Messwerte erfasst. Diese umfassen vorzugsweise wenigstens die Stromaufnahme eines Motors 23 der Messeinrichtung, die Spindeldrehzahl und/oder ein Motordrehmoment in Abhängigkeit der Zeit und/oder des beim Vorschub zurückgelegten Wegs. Alternativ oder zusätzlich hierzu kann auch eine axial wirkende Kraft, insbesondere eine Kompressionskraft, mittels eines Kraftsensors 6 detektiert werden, welcher wie zuvor beschrieben zwischen der Bohrmaschine 20 als Kraftbeaufschlagungsmittel und dem Bauteil 10 angeordnet ist. Die Messung wird für eine vordefinierte Zeit und/oder zurückgelegten axialen Weg erfasst. Zusätzlich oder alternativ kann die Messung bis zur Erreichung einer vordefinierten maximalen axialen Gegenkraft erfolgen.

In einem nachgelagerten Bewertungsschritt S3 erfolgt die Berechnung der Steifigkeitsinformationen basierend auf den erfassten Messwerten. Hierbei werden die erfassten Messwerte über eine vordefinierte Zeit und/oder den zurückgelegten Weg ausgewertet und Steifigkeitsinformationen abgeleitet und/oder berechnet. In einer besonders bevorzugten Ausführungsform erfolgt eine Berechnung des Steigungswinkels (a) der erfassten Stromaufnahme des Motors 23 der Bohrmaschine. Umso größer der Steigungswinkel (a) ist, umso steifer ist das zu bearbeitende Bauteil. Die Steifigkeitsinformationen über das Bauteil 10 können mittels der Rechen- und/Ausgabeeinheit 30 bereitgestellt werden. Der Schritt S3 kann zudem eine Klassifikation der berechneten Steifigkeitsinformationen umfassen. Hierbei können die ermittelten Informationen, beispielsweise ein die Steifigkeit repräsentierender numerischer Wert des Steigungswinkels (a) mit bekannten Steifigkeitswerten verglichen werden. Dies kann beispielsweise durch Vergleich der erfassten Steifigkeitsinformationen mit vorhandenen Datenbankinformationen erfolgen. Basierend darauf kann eine Klassifikation bzw. Einstufung der erfassten Steifigkeitsinformationen erfolgen, welche an einen Benutzer mittels der Rechen- und/oder Ausgabeeinheit ausgegeben werden kann.

In einem optionalen nachgelagerten Schritt S4 erfolgt eine Auswahl geeigneter Bohrprozessparameter für die geplante Bohrung mittels der Einstellmittel 25 der Bohrmaschine 20. Zudem kann dann ein für das eigentliche Bohren geeignetes Werkzeug bzw. geeigneter Bohrer ins Bohrfutter 21 eingespannt werden. Im optionalen nachgelagerten Schritt S5 erfolgt dann die Fertigung der Bohrung 12 mit den hinsichtlich der Steifigkeitsinformationen optimierten Prozessparameter.

**Fig. 5** zeigt ein Diagramm der erfassten Messwerte während der Kraftbeaufschlagung des Bauteils 10 durch die erfindungsgemäße Vorrichtung 40 bzw. während des erfindungsgemäßen Verfahrens über eine Zeit (t[ms]). Der Messdorn 5 wird hierbei vorzugsweise mit konstanten Vorschub und konstanter Drehzahl auf das Bauteil 10 gefahren. Der Graph 50a zeigt die vorzugsweise ungefilterte Stromaufnahme des Motors in Abhängigkeit der Zeit und des zurückgelegten Wegs während des Vorschubs. Der Graph 50b zeigt die zugehörige gefilterte bzw. geglättete Stromaufnahme des Motors. Der Graph 50c stellt den zurückgelegten Weg bzw. den bei der Messung erfolgenden Vorschub in Richtung auf das zu messende Bauteil 10 dar.

Der im Diagramm gezeigte Steigungswinkel a der Stromaufnahme des Motors 50a bzw. 50b wird vorzugsweise zur Bereitstellung der Steifigkeitsinformationen ermittelt bzw. gemessen. Je größer der Steigungswinkel a, desto größer ist die Steifigkeit des Bauteils an der erfassten Stelle. Bei stark schwankendem Steigungswinkel wird vorzugsweise der geglättete Graph 50b zu Detektion des Steigungswinkels α herangezogen. Der Graph 50c, welcher den zurückgelegten Weg darstellt, erlaubt Rückschlüsse auf die Prüfgeschwindigkeit während der Steifigkeitsmessung. Der Graph 50c bzw. dessen Werte können für die Berechnung der Steifigkeitsinformationen mit berücksichtigt werden.

Der Graph 50d stellt zusätzlich den aktuellen Arbeitsstatus der Bohrmaschine dar, mit welchem eine Anpassung der Bohrprozessparameter beispielsweise auf ein bestimmten Bauteilwerkstoff wie GFK, Aluminium oder Titan einhergehen kann. Der Graph 50d wird vorzugsweise nicht für die Berechnung bzw. Detektion der Steifigkeitsinformationen verwendet.

Das oben beschriebene Verfahren kann für eine Vielzahl von geplanten Bohrungen 12 am Bauteil 10 oder verschiedenen Bauteilen durchgeführt werden. Hierdurch können für die jeweils geplante Bohrung und an der jeweiligen Stelle des Bauteils die Steifigkeitsinformationen ermittelt werden, basierend auf welchen dann die optimalen Bohrprozessparameter ausgewählt werden können.

Die oben beschriebenen Ausführungsformen sind lediglich beispielhaft, wobei die Erfindung keineswegs auf die in den Figuren gezeigten Ausführungsformen beschränkt ist.

## Patentansprüche

1. Verfahren zur Ermittlung von Steifigkeitsinformationen eines zu bearbeitenden Bauteils (10) bei Bohrprozessen, aufweisend die Schritte:
- Anordnung einer Haltevorrichtung (1) mit einer Aufnahmeeinheit (2,3) für eine Messeinrichtung (20) an und/oder vorzugsweise unmittelbar vor dem zu bearbeitenden Bauteil (10),
- Anbringung einer Messeinrichtung (20) an der Haltevorrichtung (1) mittels der Aufnahmeeinheit (2,3),
- Beaufschlagung einer Oberfläche des zu bearbeitende Bauteils mit einer Axial- und/oder Rotationskraft vorzugsweise durch die Messeinrichtung (20),
- Erfassung von während der Kraftbeaufschlagung ermittelten Messwerten durch die Messeinrichtung (20), und
- Bereitstellung von Steifigkeitsinformationen des Bauteils (10) basierend auf den erfassten Messwerten.

2. Verfahren nach Anspruch 1, wobei die Messeinrichtung (20) eine Bohrmaschine umfasst, welche zur Durchführung eines Bohrprozesses am Bauteil (10) mittels der Haltevorrichtung (1) geeignet ist.

3. Verfahren nach Anspruch 1 oder 2, wobei die Messeinrichtung (20) einen in einer Bohrmaschine eingespannten Messdorn (5) und/oder einen Kraftsensor (6) umfasst.

4. Verfahren nach einem der Ansprüche 1 bis 3, wobei die Kraftbeaufschlagung des Bauteils (1) eine Beaufschlagung mit konstantem Vorschub und/oder konstanter Drehzahl ist.

5. Verfahren nach einem der vorhergehenden Ansprüche, wobei die Erfassung der Messwerte eine Erfassung der Stromaufnahme eines Motors (23) der Messeinrichtung (20) und/oder eine Erfassung mittels eines Kraftsensors (6) einer vorzugsweise in Axialrichtung (Z) wirkenden Kraft in Abhängigkeit der Zeit und/oder des beim Vorschub zurückgelegten Wegs umfasst.

6. Verfahren nach Anspruch 5, wobei die Steifigkeitsinformationen auf einer Veränderung und insbesondere einer Steigung der erfassten Stromaufnahme basieren.

7. Verfahren nach einem der vorhergehenden Ansprüche, wobei die Kraftbeaufschlagung und Messwerterfassung an wenigstens einer Stelle, bevorzugt an mehreren Stellen, des Bauteils (10) erfolgt, an welcher eine geplante Bohrung (12) zu setzen ist und/oder wobei die Kraftbeaufschlagung und Messwerterfassung koaxial zur jeweiligen geplanten Bohrung (12) im Bauteil (12) erfolgt.

8. Verfahren nach einem der vorhergehenden Ansprüche, aufweisend den weiteren Schritt einer Klassifikation der ermittelten Steifigkeitsinformationen durch die Messeinrichtung (20) und/oder eine dieser zugeordneten Rechen- und/oder Ausgabeeinheit (30).

9. Vorrichtung zur Ermittlung von Steifigkeitsinformationen eines zu bearbeitenden Bauteils (10) bei Bohrprozessen aufweisend
eine Haltevorrichtung (1) mit einer Aufnahmeeinheit (2,3) für eine Messeinrichtung (20) zur Positionierung an und/oder vorzugsweise unmittelbar vor dem zu bearbeitenden Bauteil (10),
eine Messeinrichtung (20), welche selektiv in der Aufnahmeeinheit (2,3) angeordnet werden kann und welche vorzugsweise dazu ausgebildet ist, eine Oberfläche des zu bearbeitende Bauteils (10) mit einer Axial- und/oder Rotationskraft zu beaufschlagen,
wobei die Messeinrichtung (20) ferner dazu ausgebildet ist, Messwerte während der Kraftbeaufschlagung zu erfassen und basierend darauf Steifigkeitsinformationen des Bauteils (10) bereitzustellen.

10. Vorrichtung nach Anspruch 9, wobei die Messeinrichtung (20) durch eine Bohrmaschine, vorzugsweise eine Vibrationsbohrmaschine, mit selektiv aufsetzbarem Messdorn (5) gebildet ist, welcher vorzugsweise ausgebildet ist, ein Zerspanen des Bauteils (10) zu vermeiden.

11. Vorrichtung nach Anspruch 10, wobei der Messdorn (5) einen im Wesentlichen zylindrischen Körper (5a) mit einer distalen flachen Kontaktabschnitt (5b) aufweist.

12. Vorrichtung nach einem der Ansprüche 10 oder 11, wobei die Bohrmaschine (20) ausgebildet ist, den damit verbundenen Messdorn (5) vorzugsweise in einem spezifischen Messprogramm mit konstantem Vorschub und/oder konstanter Drehzahl anzutreiben.

13. Vorrichtung nach einem der Ansprüche 10 bis 12, wobei die Bohrmaschine (20) ausgebildet ist, wenigstens eine Stromaufnahme eines Motors (23) in Abhängigkeit der Zeit und/oder des bei einem Vorschub des Messdorns (5) zurückgelegten Wegs zu erfassen.

14. Vorrichtung nach einem der Ansprüche 9 bis 13, wobei die Messeinrichtung (20) ausgebildet ist, einen Steigungswinkel (a) der erfassten Stromaufnahme zur Bereitstellung der Steifigkeitsinformationen heranzuziehen.

15. Vorrichtung nach einem der Ansprüche 9 bis 14, wobei die Vorrichtung eine integrierte und/oder externe Rechen- und/oder Ausgabeeinheit (30) aufweist, welche ausgebildet ist, die Steifigkeitsinformationen auszugeben und/oder zu klassifizieren.
